# EUROPÄISCHE PATENTSCHRIFT

(11) **EP 1 183 577 B1**
(45) Veröffentlichungstag und Bekanntmachung des Hinweises auf die Patenterteilung: **20.08.2003**
(21) Anmeldenummer: 00943595.9
(22) Anmeldetag: 15.05.2000
(51) Int. Cl.: G05B 19/42

(54) **VERFAHREN ZUR ERZEUGUNG EINES STEUERBAUSTEINS UND STEUERBAUSTEIN**
METHOD FOR THE PRODUCTION OF AN OPEN-LOOP CONTROL BLOCK AND SAID CONTROL BLOCK
PROCEDE DE PRODUCTION D'UN BLOC DE CONTROLE, ET BLOC DE CONTROLE Y RELATIF

(30) Priorität: 25.05.1999 DE 19923977
(43) Veröffentlichungstag der Anmeldung: 06.03.2002
(73) Patentinhaber: SIEMENS AKTIENGESELLSCHAFT, 80333 München (DE)
(72) Erfinder: SIMMERER, Helmut, D-91096 Möhrendorf (DE); LENHART, Bernd, D-96193 Wachenroth (DE)
(86) Internationale Anmeldenummer: DE0001526
(87) Internationale Veröffentlichungsnummer: WO00072097

(56) Entgegenhaltungen:
- EP-A- 0 331 551
- EP-A- 0 860 758
- WO-A-97/03389
- DE-A- 19 615 389
- MELLAH M., PRUNET F.: "L'OBJET D'AUTOMATISME: APPLICATION DE CONCEPTS D'OBJET LA PROGRAMMATION DES AUTOMATES" APII, Bd. 29, Nr. 1, 1995, Seiten 39-79, XP000865504

## Beschreibung

Die Erfindung betrifft ein Verfahren zur Erzeugung eines Steuerbausteins eines leittechnischen Systems für die Steuerung einer Anlagenkomponente sowie einen durch das Verfahren hergestellten Steuerbaustein.

In einer industriellen Anlage, beispielsweise in einer Anlage zur Energieerzeugung, sind einzelne Anlagenkomponenten über ein insbesondere digitales leittechnisches System (Prozeßleitsystem) miteinander verbunden. Eine solche Anlagenkomponente ist beispielsweise ein Ventil oder ein Motor. Eine einzelne Anlagenkomponente steht dabei in der Regel in Wechselwirkung mit einer Vielzahl von weiteren Anlagenkomponenten, und ihr Betriebszustand ist abhängig von den Betriebszuständen der weiteren Anlagenkomponenten. Mit Hilfe des leittechnischen Systems werden die Betriebszustände überwacht, und die Anlage wird automatisch oder von Hand gesteuert. Zum Betrieb der Anlage ist es notwendig, daß die Daten der verschiedenen Anlagenkomponenten erfaßt und miteinander in Verbindung gesetzt werden. Ausgehend von diesen Daten wird dann, entweder basierend auf einem manuellen Eingabebefehl des Bedienpersonals der Anlage oder automatisch, ein Steuerbefehl vom Prozeßleitsystem an die jeweilige Anlagenkomponente übermittelt.

Für die Steuerung einer Anlagenkomponente wird im leittechnischen System in der Regel ein sogenannter Steuer oder Funktionsbaustein verwendet, mit dem die einzelnen Daten erfaßt, ausgewertet und nach ihrer Aufbereitung gegebenenfalls weitergeleitet werden.

Aufgrund der vielfältigen Wechselwirkungen der Anlagenkomponenten untereinander und der damit verbundenen umfangreichen Datenmengen sind die Steuer- oder Funktionsbausteine sehr umfangreich und komplex aufgebaut. Mit zunehmender Komplexität werden die internen Funktionsabläufe des einzelnen Steuerbausteins immer weniger nachvollziehbar. Aufgrund der vielfältigen Wechselwirkungen, die zu beachten sind, ist die Erstellung des Steuerbausteins ebenfalls sehr komplex und damit zeitaufwendig. Zudem besteht die Gefahr, daß bei der Konzeption und der Programmierung des Steuerbausteins Fehler auftreten, die nicht erkannt werden.

Aber auch eine Anpassung eines bestehenden Steuerbausteins an eine spezielle Anlage erfordert eine Vielzahl von Einstellungen und Parametereingaben. Erst dann kann der vorhandene Steuerbaustein in das Prozeßleitsystem der speziellen Anlage integriert werden. Die komplexen Abhängigkeiten innerhalb des Steuerbausteins und seine Funktionen können von einem Anwender nur schwer überschaut werden. Der Änderungsaufwand am bestehenden Steuerbaustein ist daher sehr hoch und zeitaufwendig. Die Auswirkungen von Änderungen am Steuerbaustein, also an bestimmten Schaltungen oder Programmabläufen, sind zudem nur schwer vorherzusehen. Der Steuerbaustein wird oftmals auch nicht optimal eingesetzt, so daß einige seiner Funktionen ungenutzt bleiben. Meist sind Steuerbausteine absichtlich mit sehr vielen Funktionen ausgestattet, um möglichst viele Anforderungen abdecken zu können. Dies erfordert eine hohe Rechenleistung, selbst wenn für eine spezielle Anlage die Vielzahl der Funktionen nicht notwendig ist.

In der WO97/03389 ist ein Verfahren zur Erstellung eines Funktionsplanes beschrieben, wobei Ein- und Ausgänge von auf dem Bildschirm abgebildeten Modulen durch Linienführung von einem Benutzer untereinander verbunden werden. Anschließend führt ein im Rechner gespeichertes Programm eine Plausibilitätsprüfung der Verbindungen zwischen den Modulen durch.

Nachteilig dabei ist, dass die Linienführung fehleranfällig und die anschließende Plausibilitätsprüfung aufwendig ist.

In der Druckschrift Mellah, M., Prunet F.: "L'objet d'automatisme: application deconcepts d'objet à la programmation des automates", APII, Bd. 29, Nr. 1, 1995, Seiten 39 - 79, XP 000865504 ist die Anwendung der objektorientierten Programmierung in der Automatisierungstechnik beschrieben, wobei allgemeine Konzepte und Lösungsansätze offenbart sind.

Der Erfindung liegt die Aufgabe zugrunde, ein Verfahren zur Erzeugung eines Steuerbausteins anzugeben, bei dem der Steuerbaustein mit geringem Aufwand möglichst fehlerfrei erstellt werden kann und einen einfachen, vom Anwender überschaubaren Aufbau aufweist. Weiterhin liegt der Erfindung die Aufgabe zugrunde, einen nach dem Verfahren hergestellten Steuerbaustein anzugeben.

Die Aufgabe wird erfindungsgemäß durch ein Verfahren zur Erzeugung eines Steuerbausteins eines leittechnischen Systems für die Steuerung einer Anlagenkomponente gelöst, wobei der Steuerbaustein aus einer Anzahl von Programmodulen zusammengesetzt wird, die für jeweils eine Grundfunktion ausgebildet sind, und von denen jedes Programmodul eine durch die jeweilige Grundfunktion eindeutig festgelegte Schnittstelle mit einem Schnittstellentyp aufweist, wobei ein erstes Programmodul mit einer ersten Schnittstelle einem zweiten Programmodul mit einer zweiten Schnittstelle zugeordnet wird, und wobei eine Funktionsverbindung zwischen dem ersten Programmodul und dem zweiten Programmmodul dann hergestellt wird, wenn die erste Schnittstelle und die zweite Schnittstelle vom gleichen Schnittstellentyp sind.

Ein erster wesentlicher Aspekt der hier zugrundeliegenden Idee besteht darin, die komplexe Gesamtfunktionalität des Steuerbausteins in einzelne elementare Grundfunktionen aufzugliedern, wobei für jede einzelne dieser Grundfunktionen ein eigenes Programmodul vorgesehen ist. Durch diesen modularen Aufbau der Funktionsabläufe im Steuerbaustein ist dessen Auf bau als Ganzes sehr übersichtlich und kann von einem Anwender leicht überblickt werden.

Ein zweiter wesentlicher Aspekt der hier zugrundeliegenden Idee ist darin zu sehen, daß jedes Programmodul eine seiner wender sind daher Fehler, die zu einer Störung der Funktionsweise des Steuerbausteins führen, ausgeschlossen. Damit kann der Steuerbaustein in einfacher Weise erstellt werden.

Unter Erstellung oder Erzeugung des Steuerbausteins werden hier auch Änderungen verstanden, die beispielsweise aufgrund von anlagenspezifischen Anforderungen an einem bereits bestehenden Steuerbaustein vorgenommen werden müssen. Der wesentliche Vorteil des Verfahrens liegt darin, daß die notwendigen Änderungen durch gezielte Auswahl des zu ändernden Programmoduls einfach vorgenommen werden können. Dabei kann das Programmodul entweder geändert oder durch ein anlagenspezifisches Programmodul ersetzt werden.

Bevorzugt ist die Grundfunktion zumindest eines der Programmodule aus einer Anzahl von Subfunktionen zusammengesetzt, um die Übersichtlichkeit zu erhöhen. Beispielsweise ist ein Steuerbaustein "Befehlsbildung" vorgesehen, in dem die von unterschiedlichen Komponenten eingehenden Daten erfaßt, bearbeitet und ausgewertet werden. Die Subfunktionen sind in zweckdienlicher Weise den verschiedenen Komponenten zugeordnet.

Es ist insbesondere vorteilhaft, wenn das zumindest eine Programmodul eine der Anzahl der Subfunktionen gleiche Anzahl von Schnittstellen aufweist, wobei jede einzelne dieser Schnittstellen durch die Subfunktion eindeutig festgelegt ist. Das genannte Programmodul "Befehlsbildung" würde also eine Anzahl von speziellen Schnittstellen aufweisen. Beispielsweise weist es eine Schnittstelle A' zum Erfassen der Daten aus einem Gerät A und eine weitere Schnittstelle B' zum Erfassen der Daten B aus einem Gerät B auf. Dabei können die Daten vom Gerät A nur über die für sie vorgesehene Schnittstelle des Typs A' an das Programmodul übermittelt werden.

Die Funktionsverbindung zwischen zwei Programmodulen kann daher mit der Verbindung von zwei Puzzlestücken verglichen werden: Jedes Puzzlestück hat eine bestimmte geometrische Form mit Auswölbungen und Ausnehmungen, in die nur das entsprechende Gegenstück eingefügt werden kann. Ein Zusammenfügen zweier nicht zusammengehörender Puzzleteile ist nicht möglich. Ein in mehrere Subfunktionen aufgeteiltes Programmodul ist mit einem Puzzlestück zu vergleichen, an das gleichzeitig mehrere andere Puzzlestücke angefügt werden können. Die Schnittstellen der Programmodule stellen daher auf programmtechnischer Ebene die Auswölbungen und Ausnehmungen dar.

Für ein möglichst einfaches und rasches Erzeugen des Steuerbausteins werden die einzelnen Programmodule bevorzugt aus einer Bibliothek ausgewählt. Die Bibliothek ist beispielsweise ein Datenspeicher, in dem eine Vielzahl von Programmodulen mit unterschiedlichen Funktionen abgelegt sind.

Um den Steuerbaustein möglichst nur mit denjenigen Funktionen auszustatten, die in der spezifischen Anlage erforderlich sind, wird die notwendige Funktionalität des Steuerbausteins vorgegeben, und die erforderlichen Programmodule werden anhand dieser Vorgabe ausgewählt.

Die Funktionalität wird bevorzugt durch eine Eingabe des Anwenders vorgegeben, und zwar wird die Funktionalität insbesondere in Form einer Abfrageroutine vom Anwender abgefragt. Hierzu ist beispielsweise ein bildschirmgesteuerter Dialog mit dem Anwender vorgesehen, bei dem der Anwender über die für die Anlage vorgesehenen Anlagenkomponenten abgefragt wird. Der Anwender gibt hierzu in ein entsprechendes Dialogfeld die Spezifikationen der jeweiligen Anlagenkomponente ein.

Die Eingabe des Anwenders wird bevorzugt einer Plausibilitätsprüfung unterzogen, um zu verhindern, daß beim zusammengesetzten Steuerbaustein Funktionsstörungen auftreten. Falls es die Plausibilitätsprüfung erforderlich macht, wird ein solches Programmodul automatisch ausgewählt, das eine für die Funktionalität des Steuerbausteins wesentliche Grundfunktion aufweist, die aber vom Anwender nicht vorgegeben wurde.

In einer besonders bevorzugten Ausführungsform wird der Steuerbaustein aus den Programmodulen, basierend auf vorgegebenen Regeln und insbesondere automatisch, zusammengesetzt. Eine erste Regel besteht beispielsweise darin, daß ein Programmodul M automatisch ausgewählt wird, wenn ein Programmodul N ausgewählt wurde, oder auch, daß das Programmodul M ausgeschlossen ist, wenn Programmodul N ausgewählt wurde. Eine zweite Regel ist darin zu sehen, daß nur Schnittstellen mit einander angepaßten Attributen miteinander verbunden werden. Beispielsweise wird hierzu die Art und Anzahl der Eingänge und Ausgänge einer Schnittstelle sowie das Datenformat der auszutauschenden Daten zwischen zwei Programmodulen beim Verbinden zweier Programmodule abgeglichen. Eine dritte Regel verlangt beispielsweise, daß ein Eingabemodul, über das Eingaben an den Steuerbaustein übermittelt werden, ein Ausgabemodul erfordert, über das Daten vom Steuerbaustein ausgegeben werden. Und eine vierte Regel kann verlangen, daß bestimmte, durch Kausalitäten vorgegebene Bearbeitungsreihenfolgen von Ablaufprozessen eingehalten werden.

Die Programmodule mit ihren funktionsspezifischen Schnittstellen sind eine wesentliche Grundlage für das auf festen Regeln basierende Zusammensetzen des Steuerbausteins. Insbesondere für das automatische Zusammensetzen sind sie von großem Vorteil. Beim automatischen Zusammensetzen muß der Anwender nur die anlagenspezifischen Daten eingeben. Anhand dieser Eingaben wird die notwendige Gesamtfunktionalität des Steuerbausteins ermittelt; die entsprechenden Programmodule werden automatisch ausgewählt und zusammengesetzt. Die automatische Erzeugung des Steuerbausteins bietet eine sehr große Zeitersparnis im Vergleich zur manuellen Erzeugung des Steuerbausteins. Zudem sind anwenderspezifische Fehler ausgeschlossen.

Bevorzugt sind zumindest die nur innerhalb des Steuerbausteins wirksamen internen Schnittstellen derart standardisiert, daß der Datenaustausch zwischen den Programmodulen über diese internen Schnittstellen von Änderungen am internen Programmablauf eines Programmoduls unbeeinflußt ist. Der Vorteil der Standardisierung der Schnittstellen liegt darin, daß notwendige anlagenspezifische Anpassungen an einzelne Programmodule ohne weiteres vorgenommen werden können. Dabei besteht keine Gefahr, daß solche Änderungen sich auf das funktionelle Zusammenwirken der einzelnen Programmodule untereinander negativ auswirken.

Neben den internen weist der Steuerbaustein auch externe Schnittstellen auf, über die er mit externen Komponenten verbunden ist, beispielsweise mit einem weiteren Steuerbaustein, mit der Anlagenkomponente oder auch mit einer Datenleitung.

Zum externen Datenaustausch des Steuerbausteins mit der Anlagenkomponente wird als Programmodul vorzugsweise ein gerätespezifisches Gerätemodul ausgewählt. Das Gerätemodul weist insbesondere eine gerätespezifische Schnittstelle auf; es ist als eine Art Treiber- oder Kommunikationsmodul ausgestaltet, welches die Kommunikation des Steuerbausteins mit der Anlagenkomponente ermöglicht.

Zur Lösung der auf den Steuerbaustein bezogenen Aufgabe wird dieser gemäß der Erfindung nach dem oben beschriebenen Verfahren hergestellt. Im Hinblick auf den Steuerbaustein gelten sinngemäß die gleichen Vorteile und besonderen Ausgestaltungen wie im Hinblick auf das Verfahren.

Ein Ausführungsbeispiel der Erfindung wird im folgenden anhand der Figuren näher erläutert. Es zeigen jeweils in schematischer Darstellung:
- FIG 1: einen aus einzelnen Programmodulen zusammengesetzten Steuerbaustein,
- FIG 2: eine gerätetechnische Anordnung zur Durchführung des Verfahrens zur Erzeugung des Steuerbausteins und
- FIG 3: ein grob vereinfachtes Blockbild einer Anlage.

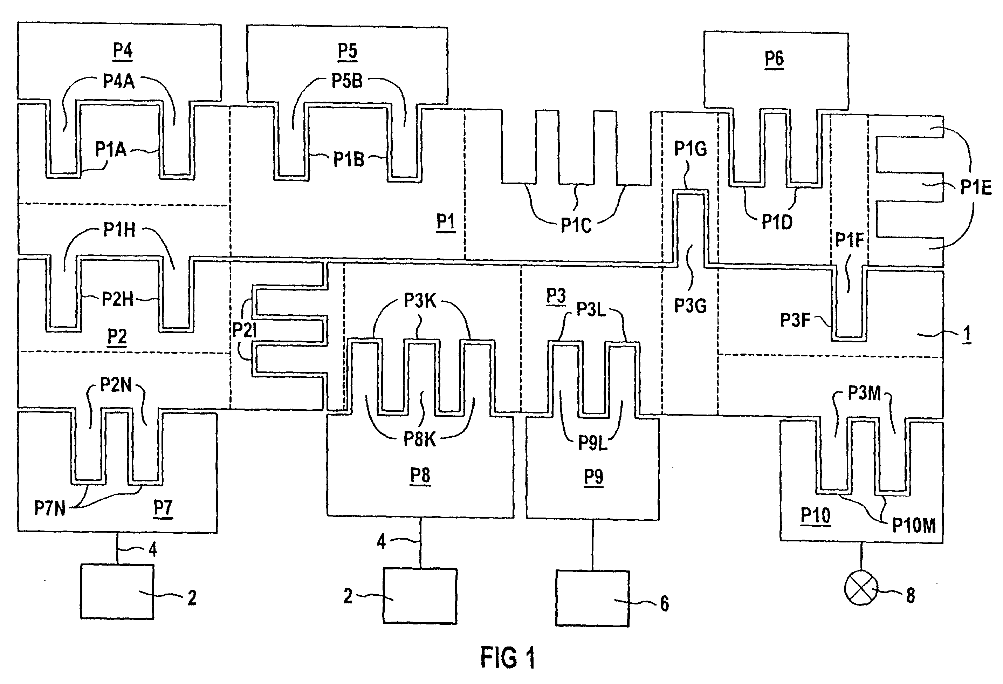

Gemäß Figur 1 weist ein Steuerbaustein 1 mehrere Programmodule P1 bis P10 auf, die miteinander in Funktionsverbindung stehen. Der Steuerbaustein 1 ist zur Steuerung einer Anlagenkomponente 2, beispielsweise zur Antriebssteuerung eines Motors, ausgebildet. Im Ausführungsbeispiel sind die Grundfunktionen der Programmodule P1, P2 und P3 in mehrere Subfunktionen unterteilt, die jeweils durch gestrichelte Linien angedeutet sind. Den restlichen Programmodulen P4 bis P10 ist jeweils nur eine einzige Grundfunktion zugeordnet.

Die Programmodule P1 bis P3 besitzen mehrere Schnittstellen, und die Programmodule P4 bis P10 besitzen jeweils nur eine Schnittstelle. Die Bezeichnung der Schnittstellen in Figur 1 wird weiter unten erläutert. Die Definition der einzelnen Schnittstellen ist durch die spezielle Grundfunktion oder die Subfunktion des Programmoduls festgelegt. Den Schnittstellen werden hierzu bestimmte programmtechnische Attribute zugewiesen, wie beispielsweise die Art und die Anzahl der Ein- oder Ausgänge, das Datenformat, über das die Programmodule P1 bis P10 miteinander kommunizieren, oder auch eine dem Programmodul zugeordnete Datenadresse.

Das Programmodul P1 besitzt beispielsweise als Grundfunktion die Funktion "Prioritäten und Befehlsbildung". Diese Grundfunktion ist in mehrere Subfunktionen unterteilt. Eine hiervon dient der Verarbeitung von Bedienbefehlen. Dieser Subfunktion ist eine Schnittstelle P1A des Programmoduls P1 zugeordnet, über die dieses mit dem Programmodul P4 mit der Grundfunktion "Bedienbefehle" in Verbindung steht. Hierzu weist das Programmodul P4 eine zu der Schnittstelle P1A passende Schnittstelle P4A auf. Die beiden Schnittstellen P4A und P1A haben die zueinander korrespondierenden Attribute, so daß sie miteinander kompatibel sind.

Jedem Programmodul P1 bis P10 ist also ein der jeweiligen Grund- bzw. Subfunktion eindeutig durch die Attribute festgelegter Schnittstellentyp zugeordnet. Die untereinander eindeutig unterscheidbaren Schnittstellentypen sind in Figur 1 mit Buchstaben A bis N bezeichnet, wobei gleiche Buchstaben den gleichen Schnittstellentyp bezeichnen. Unter Schnittstellen mit gleichem Schnittstellentyp werden hierbei Schnittstellen bezeichnet, die zueinander korrespondierende Attribute aufweisen. Eine Typ-A-Schnittstelle P1A des Programmoduls P1 kann also nur mit einer korrespondierenden Typ-A-Schnittstelle P4A eines anderen Programmoduls, beispielsweise des Programmoduls P4, in Funktionsverbindung treten. Gleiches gilt für das Programmodul P5 mit der Grundfunktion "Automatikbefehle", über das automatisch vom Prozeßleitsystem veranlaßte Befehle gebildet und ausgegeben werden. Das Programmodul P5 weist eine Schnittstelle P5B auf, die für die Funktionsverbindung mit der korrespondierenden Schnittstelle P1B des Programmoduls P1 ausgebildet ist. Da sich die Schnittstellentypen A und B unterscheiden, kann das Programmodul P5 mit seiner Schnittstelle P5B nicht mit der Schnittstelle P1A verbunden werden. Analoges gilt für alle weiteren Programmodule.

Es ist nicht erforderlich, daß an jeder Schnittstelle P1A bis P1H des Programmoduls P1 ein Programmodul angeschlossen ist. Je nachdem, welche Funktionalität der Steuerbaustein 1 insgesamt aufweisen muß, können einige Subfunktionen des Programmoduls P1 unbenutzt bleiben. Einige Schnittstellen, im Ausführungsbeispiel sind dies die Schnittstellen P1C und P1E, bleiben dann unbelegt. Sie sind beispielsweise zur Kommunikation mit einem weiteren Steuerbaustein ausgebildet, und an ihnen kann nachträglich ohne Probleme ein zur Kommunikation mit dem weiteren Steuerbaustein ausgebildetes Programmodul angeschlossen werden. Die Schnittstellen P1C und P1E sind daher als externe Schnittstellen anzusehen, die im Steuerbaustein 1 keine Innenwirkung entfalten.

Das Programmodul P6 besitzt beispielsweise die Grundfunktion "Schutzbefehle", über die Befehle zum Schutz der Anlagenkomponente verarbeitet werden. Die zugehörige Schnittstelle des Typs D weist ebenso wie in der Regel alle anderen Schnittstellen einen Aus- und einen Eingang auf. Das Programmodul P2 besitzt die Grundfunktion "Speicherung" und dient der Speicherung von Befehlen, bevor sie nach außen abgegeben werden. Die Befehlsausgabe erfolgt dabei über das Programmodul P7 mit der Grundfunktion "Befehlsausgabe". Hierzu stehen die beiden Programmodule P2 und P7 über die Schnittstellenkombination P2N - P7N in Verbindung. Über das Programmodul P7 ist der Steuerbaustein 1 zur Steuerung der Anlagenkomponente 2 mit dieser verbunden.

Das Programmodul P7 ist hierfür insbesondere als ein gerätespezifisches Gerätemodul ausgestaltet. Es bereitet also die vom Programmodul P2 abgegebenen Befehle auf, so daß sie von der Anlagenkomponente 2 ausgeführt werden können. Seine Schnittstelle P2N kann daher als externe Schnittstelle zu dem spezifischen Gerätemodul aufgefaßt werden. Das Gerätemodul P7 sorgt also für die Kommunikation zwischen Steuerbaustein 1 und Anlagenkomponente 2. Wird die Anlagenkomponente 2 ausgetauscht, so braucht lediglich das Gerätemodul P7 an die neue Anlagenkomponente 2 angepaßt zu werden, oder es braucht lediglich das alte Gerätemodul P7 durch ein neues ersetzt zu werden. Die internen Abläufe im Steuerbaustein 1 bleiben davon unberührt.

Die Ausgabe der Befehle über das Gerätemodul P7 erfolgt bevorzugt an einen Datenbus 4. Über diesen Datenbus 4 werden die Befehle an die Anlagenkomponente 2 übermittelt. Der Datenbus 4 ist beispielsweise als Feldbus ausgebildet, über den mehrere verschiedene Anlagenkomponenten 2 miteinander in Verbindung stehen.

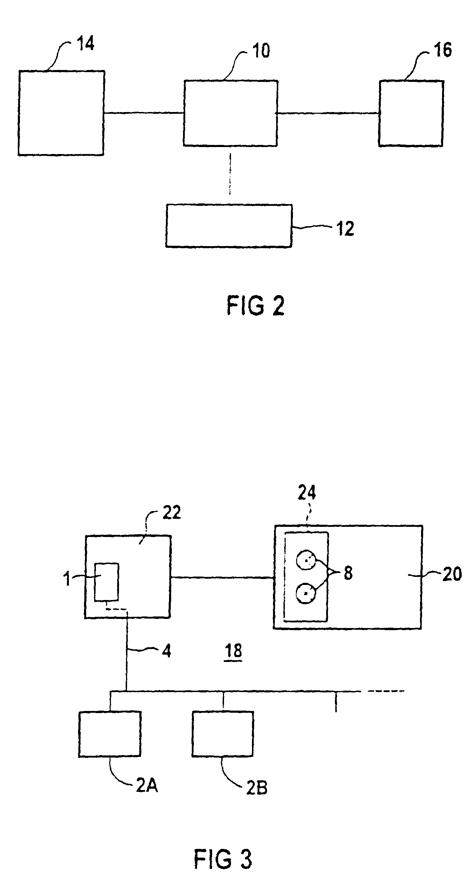

Das Programmodul P3 besitzt die Grundfunktion "Erfassen Meldungen". Es dient neben der Erfassung von Meldungen von Anlagenkomponenten 2 auch deren Überwachung. Es steht zum Datenaustausch mit dem Programmodul P1 und dem Programmodul P2 in Verbindung. Zusätzlich weist es Schnittstellen P3K, P3L und P3M auf, über die es mit den Programmodulen P8, P9 bzw. P10 in Verbindung steht. Das Programmodul P8 weist beispielsweise die Grundfunktion "Erfassung Rückmeldungen" und das Programmodul P9 weist die Grundfunktion "Erfassung Schaltanlage" auf. Über das Programmodul P8 werden demnach die Rückmeldungen, beispielsweise von der Anlagenkomponente 2, verarbeitet. Und im Programmodul P9 werden die Meldungen aus einer Schaltanlage 6 verarbeitet. Das Programmodul P10 dient beispielsweise zur Überwachung und Steuerung mindestens einer Kontrollampe 8 eines vom Bediener einzusehenden Bedien- oder Kontrollschirms 24 (vergl. Figur 3). Das Programmodul P10 besitzt die Grundfunktion "Lampen".

Die internen Programmabläufe der einzelnen Programmodule P1 bis P10 sind in sich abgeschlossen und üben keine unmittelbare Wechselwirkung mit den internen Programmabläufen von weiteren Programmodulen aus. Die einzelnen Programmodule P1 bis P10 können daher als rückwirkungsfrei bezeichnet werden. Sie kommunizieren nur über ihre standardisierten Schnittstellen miteinander. Eine Änderung am internen Programmablauf eines Programmoduls P1 bis P10 beeinflußt die Schnittstellenfunktion nicht.

Bei dem Verfahren zur Erzeugung des Steuerbausteins 1 wird bevorzugt zunächst die Funktionalität des Steuerbausteins 1 festgelegt. Dies erfolgt insbesondere über einen Dialog oder eine Abfrage mit dem Anwender. Hierzu ist gemäß Figur 2 eine Rechnereinheit 10 vorgesehen, die mit einem Eingabegerät 12, einem Anzeigegerät 14 und einem eine Bibliothek 16 bildenden Datenspeicher verbunden ist. In der Rechnereinheit 10 ist eine Abfrageroutine abgelegt, in deren Verlauf der Anwender über die gewünschte Funktionalität des Steuerbausteins 1 abgefragt wird. Hierzu kann der Anwender mit der Rechnereinheit 10 über das Anzeigegerät 14, beispielsweise über einen Bildschirm, und über das Eingabegerät 12, beispielsweise über eine Tastatur, kommunizieren. Auf dem Anzeigegerät 14 wird eine Abfrage- oder Eingabemaske angezeigt, über die der Anwender zur Eingabe und zur Definition von anlagenspezifischen Merkmalen aufgefordert wird. Der Anwender gibt die Merkmale über das Eingabegerät 12 ein.

Anhand der Gesamtfunktionalität des Steuerbausteins 1, die aufgrund der Eingaben des Anwenders ermittelt wird, wählt die Rechnereinheit 10 aus der Bibliothek 16 automatisch die notwendigen Programmodule aus und verknüpft diese auf Basis der ebenfalls in der Rechnereinheit 10 abgelegten Regeln. Die Eingaben des Anmelders werden dabei einer Plausibilitätsprüfung unterzogen. Die Rechnereinheit 10 ist derart ausgelegt, daß sie fehlerhafte oder unzulängliche Eingaben erkennt und entsprechend darauf reagiert, beispielsweise durch eine Fehlermeldung oder eine erneute Abfrage. Programmodule, die für die gewünschte Gesamtfunktionalität des Steuerbausteins 1 notwendig sind, jedoch vom Anwender nicht eingegeben wurden, werden von der Rechnereinheit 10 automatisch aus der Bibliothek 16 mit ausgewählt.

Die Bibliothek 16 umfaßt eine Vielzahl von einzelnen Programmodulen für unterschiedliche Anforderungen, so daß zur Erzeugung eines speziellen, an eine bestimmte Anlagenkomponente angepaßten Steuerbausteins 1 die Notwendigkeit der Programmierung eines Programmoduls möglichst entfällt.

Gemäß Figur 3 weist eine Anlage 18, beispielsweise eine Anlage zur Energieerzeugung, eine Leitwarte 20 und eine Anzahl von Anlagenkomponenten 2A, 2B auf, von denen nur zwei dargestellt sind. Diese Anlagenkomponenten 2A, 2B sowie die Leitwarte 20 stehen mit einem leittechnischen System 22 in Verbindung, welches den Steuerbaustein 1 zur Ansteuerung einer der Anlagenkomponenten 2A, 2B aufweist. Hierzu ist das leittechnische System 22 über einen Datenbus 4 mit den Anlagenkomponenten 2A, 2B verbunden. Die Leitwarte 20 weist einen Bedien- oder Kontrollschirm 24 auf, der eine Anzahl von Kontrollampen 8 umfaßt. Über die Leitwarte 20 kann die Anlage 18 gesteuert und überwacht werden.

Für das Verfahren zur Erzeugung des Steuerbausteins 1 ist wesentlich, daß die Gesamtfunktionalität des Steuerbausteins 1 in mehrere Grund- und Subfunktionen aufgeteilt ist, und daß jede Grundfunktion von einem Programmodul P1 bis P10 bearbeitet wird. Die Programmodule P1 bis P10 weisen dabei jeweils durch die Grund- bzw. Subfunktionen eindeutig festgelegte Schnittstellen mit untereinander unterscheidbaren Schnittstellentypen A bis N auf. Aufgrund des modularen Aufbaus und der eindeutig festgelegten Schnittstellen ist insbesondere ein auf Regel basierendes und automatisches Erzeugen des Steuerbausteins 1 möglich.

## Patentansprüche

1. Verfahren zur Erzeugung eines Steuerbausteins (1) eines leittechnischen Systems (22) für die Steuerung einer Anlagenkomponente (2), wobei der Steuerbaustein (1) aus einer Anzahl von Programmodulen (P1 bis P10) zusammengesetzt wird, die für jeweils eine Grundfunktion ausgebildet sind, und von denen jedes Programmodul (P1 bis P10) eine durch die jeweilige Grundfunktion eindeutig festgelegte Schnittstelle (P1A, P4A; P1B, P5B;...) mit einem Schnittstellentyp (A bis N) aufweist, wobei ein erstes Programmodul (P1) mit einer ersten Schnittstelle (P1A) einem zweiten Programmodul (P4) mit einer zweiten Schnittstelle (P4A) zugeordnet wird, und wobei eine Funktionsverbindung zwischen dem ersten Programmodul (P1) und dem zweiten Programmodul (P4) nur dann hergestellt wird, wenn die erste Schnittstelle (P1A) und die zweite Schnittstelle (P4A) vom gleichen Schnittstellentyp (A) sind.

2. Verfahren nach Anspruch 1, bei dem die Grundfunktion zumindest eines der Programmodule (P1 bis P10) aus einer Anzahl von Subfunktionen zusammengesetzt ist.

3. Verfahren nach Anspruch 2, bei dem das zumindest eine Programmodul (P1 bis P10) eine der Anzahl der Subfunktionen gleiche Anzahl von Schnittstellen (P1A ... P10M) aufweist.

4. Verfahren nach einem der vorhergehenden Ansprüche, bei dem die Programmodule (P1 bis P10) aus einer Bibliothek (16) ausgewählt werden.

5. Verfahren nach einem der vorhergehenden Ansprüche, bei dem die Funktionalität des Steuerbausteins (1) vorgegeben wird, und bei dem der Steuerbaustein (1) anhand der Vorgabe dieser Funktionalität die Programmodule (P1 bis P10) auswählt.

6. Verfahren nach Anspruch 5, bei dem die Funktionalität durch eine Eingabe des Anwenders vorgegeben wird, die insbesondere vom Anwender im Laufe einer Abfrageroutine abgefragt wird.

7. Verfahren nach Anspruch 6, bei dem die Eingabe des Anwenders einer Plausibilitätsprüfung unterzogen wird, und bei dem ein solches Programmodul (P1 bis P10) automatisch ausgewählt wird, das eine für die Funktionalität des Steuerbausteins (1) wesentliche Grundfunktion aufweist, welche vom Anwender nicht vorgegeben wurde.

8. Verfahren nach einem der vorhergehenden Ansprüche, bei dem der Steuerbaustein (1) aus den Programmodulen (P1 bis P10), basierend auf vorgegebenen Regeln und insbesondere automatisch, zusammengesetzt wird.

9. Verfahren nach einem der vorhergehenden Ansprüche, bei dem die nur innerhalb des Steuerbausteins (1) wirksamen internen Schnittstellen (P1A, P1B,...) standardisiert sind, so daß der Datenaustausch zwischen den Programmodulen (P1 bis P10) innerhalb des Steuerbausteins (1) von Änderungen am internen Programmablauf eines Programmoduls (P1 bis P10) unbeeinflußt ist.

10. Verfahren nach einem der vorhergehenden Ansprüche, bei dem zum externen Datenaustausch des Steuerbausteins (1) mit der Anlagenkomponente (2), insbesondere zum externen Datenaustausch über einen Datenbus (4), als Programmodul (P7) ein gerätespezifisches Gerätemodul ausgewählt wird.

11. Verfahren nach einem der vorhergehenden Ansprüche, bei dem aus den Programmodulen (P1 bis P10) zumindest ein Programmodul mit einer der Grundfunktionen "Bedienbefehle", "Automatikbefehle", "Schutzbefehle", "Befehlsbildung", "Speicherung", "Befehlsausgabe", "Erfassung Meldungen" und "Lampen" ausgewählt wird.

12. Steuerbaustein (1) eines leittechnischen Systems (22) für die Steuerung einer Anlagenkomponente (2), wobei der Steuerbaustein (1) aus einer Anzahl von Programmmodulen (P1 bis P10) zusammengesetzt ist, die für jeweils eine Grundfunktion ausgebildet sind, und von denen jedes Programmmodul (P1 bis P10) eine durch die jeweilige Grundfunktion eindeutig festgelegte Schnittstelle (P1A, P4A; P1B, P5B; ..) mit einem Schnittstellentyp (A bis N) aufweist, wobei ein erstes Programmmodul mit einer ersten Schnittstelle (P1A) einem zweiten Programmmodul (P4) mit einer zweiten Schnittstelle (P4A) zugeordnet ist, und wobei eine Funktionsverbindung zwischen dem ersten Programmmodul (P1) und dem zweiten Programmmodul (P4) dann hergestellt ist, wenn die erste Schnittstelle (P1A) und die zweite Schnittstelle vom gleichen Schnittstellentyp (A) sind.

## Claims

1. Method for producing a control module (1) of a control system (22) for controlling a plant component (2), wherein the control module (1) is assembled from a number of program modules (P1 to P10) designed for one basic function in each case, and of which each program module (P1 to P10) has an interface (P1A, P4A; P1B, P5B; ...) of an interface type (A to N) clearly defined by the respective basic function, wherein a first program module (P1) having a first interface (P1A) is assigned to a second program module (P4) having a second interface (P4A), and wherein a functional connection is established between the first program module (P1) and the second program module (P4) only if the first interface (P1A) and the second interface (P4A) are of the same interface type (A).

2. Method according to Claim 1, wherein the basic function of at least one of the program modules (P1 to P10) is assembled from a number of subfunctions.

3. Method according to Claim 2, wherein the at least one program module (P1 to P10) has the same number of interfaces (P1A ... P10M) as the number of subfunctions.

4. Method according to one of the preceding claims, wherein the program modules (P1 to P10) are selected from a library (16).

5. Method according to one of the preceding claims, wherein the functionality of the control module (1) is specified, and wherein the control module (1) selects the program modules (P1 to P10) on the basis of the specification of said functionality.

6. Method according to Claim 5, wherein the functionality is specified by a user input, in particular one elicited from the user in the course of a query routine.

7. Method according to Claim 6, wherein the user input is subjected to a plausibility check, and wherein a program module (P1 to P10) which has a basic function essential for the functionality of the control module (1), but which was not specified by the user, is automatically selected.

8. Method according to one of the preceding claims, wherein the control module (1) is assembled from the program modules (P1 to P10) on the basis of predetermined rules, in particular automatically assembled.

9. Method according to one of the preceding claims, wherein the internal interfaces (P1A, P1B, ...) active only within the control module (1) are standardized so that data exchange between the program modules (P1 to P10) within the control module (1) is not influenced by changes to the internal program flow of a program module (P1 to P10).

10. Method according to one of the preceding claims, wherein for external data exchange between the control module (1) and the plant component (2), in particular for external data exchange over a data bus (4), a device-specific device module is selected as the program module (P7).

11. Method according to one of the preceding claims, wherein at least one program module having one of the basic functions "operator instructions", "automatic instructions", "protection instructions", "instruction generation", "storage", "instruction output", "record messages", and "lamps" is selected from the program modules (P1 to P10).

12. Control module (1) of a control system (22) for controlling a plant component (2), wherein the control module (1) is assembled from a number of program modules (P1 to P10) designed for one basic function in each case, and of which each program module (P1 to P10) has an interface (P1A, P4A; P1B, P5B; ...) of an interface type (A to N) clearly defined by the respective basic function, wherein a first program module having a first interface (P1A) is assigned to a second program module (P4) having a second interface (P4A), and wherein a functional connection is established between the first program module (P1) and the second program module (P4) if the first interface (P1A) and the second interface are of the same interface type (A).

## Revendications

1. Procédé pour la production d'un module de commande (1) d'un système technique de contrôle (22) pour la commande d'un élément d'installation (2), dans lequel on compose le module de commande (1) à partir d'un certain nombre de modules de programme (P1 à P10) qui sont conçus chacun pour une fonction de base et parmi lesquels chaque module de programme (P1 à P10) comporte une interface (P1A, P4A ; P1B, P5B ; ...) fixée de manière unique par la fonction de base respective et ayant un type d'interface (A à N), dans lequel on associe un premier module de programme (P1) avec une première interface (P1A) à un deuxième module de programme (P4) avec une deuxième interface (P4A) et dans lequel on n'établit une liaison fonctionnelle entre le premier module de programme (P1) et le deuxième module de programme (P4) que lorsque la première interface (P1A) et la deuxième interface (P4A) sont du même type d'interface (A).

2. Procédé selon la revendication 1, dans lequel la fonction de base d'au moins l'un des modules de programme (P1 à P10) est composée d'un certain nombre de sous-fonctions.

3. Procédé selon la revendication 2, dans lequel ce module de programme (P1 à P10) comporte un nombre d'interfaces (P1A à P10M) égal au nombre des sous-fonctions.

4. Procédé selon l'une des revendications précédentes, dans lequel on sélectionne les modules de programme (P1 à P10) dans une bibliothèque (16).

5. Procédé selon l'une des revendications précédentes, dans lequel on prescrit la fonctionnalité du module de commande (1) et dans lequel le module de commande (1) sélectionne les modules de programme (P1 à P10) à l'aide de la prescription de cette fonctionnalité.

6. Procédé selon la revendication 5, dans lequel on prescrit la fonctionnalité via une entrée de l'utilisateur qui est notamment demandée à l'utilisateur au cours d'une routine d'interrogation.

7. Procédé selon la revendication 6, dans lequel on soumet l'entrée de l'utilisateur à un contrôle de vraisemblance et dans lequel on sélectionne automatiquement un module de programme (P1 à P10) qui comporte une fonction de base qui est essentielle à la fonctionnalité du module de commande (1) mais qui n'a pas été prescrite par l'utilisateur.

8. Procédé selon l'une des revendications précédentes, dans lequel on compose le module de commande (1) à partir des modules de programme (P1 à P10) en se basant sur des règles prescrites et notamment de façon automatique.

9. Procédé selon l'une des revendications précédentes, dans lequel les interfaces intemes (P1A, P1B, ...) actives seulement à l'intérieur du module de commande (1) sont standardisées de telle sorte que l'échange de données entre les modules de programme (P1 à P10) à l'intérieur du module de commande (1) n'est pas influencé par des modifications de l'exécution de programme inteme d'un module de programme (P1 à P10).

10. Procédé selon l'une des revendications précédentes, dans lequel, pour l'échange de données exteme du module de commande (1) avec l'élément d'installation (2), notamment pour l'échange de données exteme par l'intermédiaire d'un bus de données (4), on sélectionne comme module de programme (P7) un module d'appareil spécifique à l'appareil.

11. Procédé selon l'une des revendications précédentes, dans lequel on sélectionne parmi les modules de programme (P1 à P10) au moins un module de programme ayant l'une des fonctions de base "instructions de commande", "instructions automatiques", "instructions de protection", "formation d'instructions", "mémorisation", "sortie d'instructions", "détection de messages" et "lampes".

12. Module de commande (1) d'un système technique de contrôle (22) pour la commande d'un élément d'installation (2), dans lequel le module de commande (1) est composé à partir d'un certain nombre de modules de programme (P1 à P10) qui sont conçus chacun pour une fonction de base et parmi lesquels chaque module de programme (P1 à P10) comporte une interface (P1A, P4A ; P1B, P5B ; ...) fixée de manière unique par la fonction de base respective et ayant un type d'interface (A à N), dans lequel un premier module de programme avec une première interface (P1A) est associé à un deuxième module de programme (P4) avec une deuxième interface (P4A) et dans lequel une liaison fonctionnelle est établie entre le premier module de programme (P1) et le deuxième module de programme (P4) lorsque la première interface (P1A) et la deuxième interface sont du même type d'interface (A).
